# EUROPEAN PATENT SPECIFICATION

(11) **EP 2 971 675 B1**
(45) Date of publication and mention of the grant of the patent: **03.11.2021**
(21) Application number: 14769116.6
(22) Date of filing: 11.03.2014
(51) Int. Cl.: F02C 7/20, F01D 25/00, G01P 3/00, F01D 25/34, F01D 21/04, F02C 7/36, F01D 21/02, F01D 21/00

(54) **SPEED SENSOR PROBE LOCATION IN A GAS TURBINE ENGINE**
LAGE EINES GESCHWINDIGKEITSSENSORS IN EINEM GASTURBINENMOTOR
POSITIONNEMENT D'UNE SONDE DE CAPTEUR DE VITESSE DANS UN MOTEUR À TURBINE À GAZ

(30) Priority: 15.03.2013 US 201313837236
(43) Date of publication of application: 20.01.2016
(73) Proprietor: Raytheon Technologies Corporation, Farmington, CT 06032 (US)
(72) Inventor: CIGAL, Brian P., Windsor, Connecticut 06248 (US); DAVIS, Todd A., Tolland, Connecticut 06084 (US)
(74) Representative: Dehns
(86) International application number: PCT/US2014/023209
(87) International publication number: WO 2014/150420

(56) References cited:
- US-A1- 2004 187 473
- US-A1- 2004 187 473
- US-A1- 2010 000 222
- US-A1- 2010 058 735
- US-A1- 2010 058 735
- US-A1- 2012 195 753
- US-A1- 2012 195 753
- US-B1- 6 393 355
- None

## Description

### BACKGROUND

This disclosure relates to gas turbine engines and, more particularly, to the location of a speed sensor probe in a gas turbine engine.

A typical turbofan engine includes a compressor section and a turbine section that is coupled to drive the compressor section and a fan of the engine. In a two-spool engine design, a high pressure turbine is coupled through a high spool to drive a high pressure compressor and a low pressure turbine is coupled through a low spool to drive a low pressure compressor. Typically, a probe is mounted in the engine to determine the speed of at least one of the spools. One challenge in determining the location of the probe in the engine includes packaging concerns with regard to the engine architecture. Another challenge is to mount the speed sensor probe in a location that can detect or mitigate certain engine events that can cause an over-speed condition. A gas turbine engine is described in US 2004/187473.

### SUMMARY

A gas turbine engine according to claim 1 of the present invention includes a fan, a fan drive gear system coupled to drive the fan about an engine central axis, a compressor section including a first compressor and a second compressor, and a turbine section. The turbine section includes a first turbine coupled to drive a first spool. The first spool is coupled at a first axial position to a compressor hub that is coupled to drive the first compressor and the first spool is coupled at a second, different axial position to a fan drive input shaft that is coupled to drive the fan drive gear system. At least one sensor target is coupled to rotate with the first spool. A second turbine is coupled through a second spool to drive the second compressor. A sensor probe is operable together with the sensor target to determine a rotational speed of the first spool. The sensor probe is located at a third axial position that is axially forward of the first axial position and axially aft of the second axial position.

A further embodiment of any of the foregoing embodiments includes a fan output shaft coupled to be rotated by the fan drive gear system and coupled at a fourth axial position to the fan, the fourth axial position being distinct from the first axial position and the second axial position, and wherein the fourth axial position is forward of the second axial position and the third axial position.

In a further embodiment of any of the foregoing embodiments, the compressor section is axially aft of the fan drive gear system.

In a further embodiment of any of the foregoing embodiments, the first compressor has three stages.

In a further embodiment of any of the foregoing embodiments, the first turbine has a maximum diameter D1 and the fan has a fan diameter D2 such that a ratio D1/D2 is less than 0,6.

In a further embodiment of any of the foregoing embodiments, the sensor probe is stationary relative to the first spool.

A further embodiment of any of the foregoing embodiments includes a controller in communication with the sensor probe, the controller is operable to cease a fuel supply to a combustor in response to a rotational speed of the first spool exceeding a predetermined threshold rotational speed.

In a further embodiment of any of the foregoing embodiments, the controller is a full authority digital engine control.

In a further embodiment of any of the foregoing embodiments, the fan drive gear system is an epicyclic gear system.

In a further embodiment of any of the foregoing embodiments, the fan drive gear system includes a planetary gear having a gear reduction ratio greater than about 23:1.

In a further embodiment of any of the foregoing embodiments, the fan drive gear system includes a planetary gear having a gear reduction ratio greater than about 25:1.

In a further embodiment of any of the foregoing embodiments, the fan drive gear system provides a speed reduction from the first spool to the fan.

In a further embodiment of any of the foregoing embodiments, the fan and the compressor section define a bypass ratio that is greater than about 6.

A method of assembling a gas turbine engine is provided as claimed in claim 11.

A further embodiment of any of the foregoing embodiments includes, prior to affixing the speed sensor probe, removing a used speed sensor probe from the gas turbine engine such that the affixed speed sensor probe replaces the used speed sensor probe.

A method of operating a gas turbine engine is provided as claimed in claim 14.

A further embodiment of any of the foregoing embodiments includes ceasing the fuel supply in response to the rotational speed exceeding the predetermined threshold rotational speed.

### BRIEF DESCRIPTION OF THE DRAWINGS

The various features and advantages of the disclosed examples will become apparent to those skilled in the art from the following detailed description. The drawings that accompany the detailed description can be briefly described as follows.
Figure 1 illustrates an example gas turbine engine.
Figure 2 schematically illustrates the gas turbine engine of Figure 1.
Figure 3 illustrates a portion of a gas turbine engine that includes a speed sensor probe, not covered by the claimed invention.
Figure 4 illustrates selected portions of a gas turbine engine according to the present invention with a different sensor probe location.

### DETAILED DESCRIPTION OF THE PREFERRED EMBODIMENT

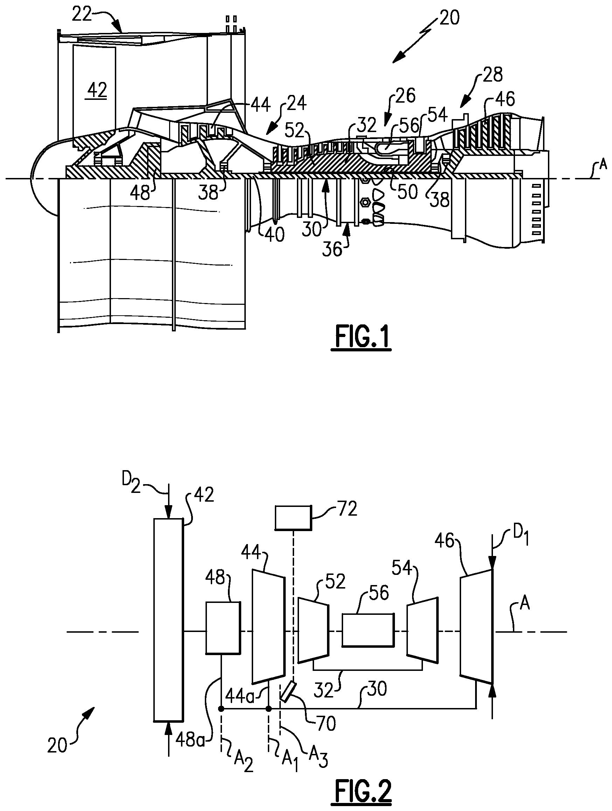

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a first spool 30 and a second spool 32 mounted for rotation about an engine central axis A relative to an engine static structure 36 via several bearing systems 38. It should be understood that various bearing systems 38 at various locations may alternatively or additionally be provided.

The first spool 30 generally includes a first shaft 40 that interconnects a fan 42, a first compressor 44 and a first turbine 46. In the example shown, the first compressor 44 has three stages. The first shaft 40 is connected to the fan 42 through a gear assembly of a fan drive gear system 48 to drive the fan 42 at a lower speed than the first spool 30. The second spool 32 includes a second shaft 50 that interconnects a second compressor 52 and second turbine 54. The first spool 30 runs at a relatively lower pressure than the second spool 32. It is to be understood that "low pressure" and "high pressure" or variations thereof as used herein are relative terms indicating that the high pressure is greater than the low pressure. An annular combustor 56 is arranged between the second compressor 52 and the second turbine 54. The first shaft 40 and the second shaft 50 are concentric and rotate via bearing systems 38 about the engine central axis A which is collinear with their longitudinal axes.

The core airflow is compressed by the first compressor 44 then the second compressor 52, mixed and burned with fuel in the annular combustor 56, then expanded over the second turbine 54 and first turbine 46. The first turbine 46 and the second turbine 54 rotationally drive, respectively, the first spool 30 and the second spool 32 in response to the expansion.

In a further example, the engine 20 is a high-bypass geared aircraft engine that has a bypass ratio that is greater than about six (6), with an example embodiment being greater than ten (10), the gear assembly of the fan drive gear system 48 is an epicyclic gear train, such as a planetary gear system or other gear system, with a gear reduction ratio of greater than about 2.3:1 and the first turbine 46 has a pressure ratio that is greater than about 5. The first turbine 46 pressure ratio is pressure measured prior to inlet of first turbine 46 as related to the pressure at the outlet of the first turbine 46 prior to an exhaust nozzle. In a further embodiment, the first turbine 46 has a maximum rotor diameter D1 (Figure 2) and the fan 42 has a fan diameter D2 such that a ratio of D1/D2 is less than about 0.6. It should be understood, however, that the above parameters are only exemplary.

A significant amount of thrust is provided by the bypass flow B due to the high bypass ratio. The fan section 22 of the engine 20 is designed for a particular flight condition -- typically cruise at about 0.8 Mach and about 10668 meter (35,000 feet). The flight condition of 0.8 Mach and 10668 m (35,000 ft), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 345 m/s (1150 ft / second).

Figure 2 schematically illustrates selected components of the above-described gas turbine engine 20, not covered by the claimed invention. As shown, the first spool 30 is coupled at a first axial position A₁ to a compressor hub 44a that is coupled to drive the first compressor 44. The first spool 30 is also coupled at a second axial position A₂ to a fan drive gear system input coupling 48a to drive the gear assembly of the fan drive gear system 48. For example, the input coupling 48a can be the mechanical fuse location or spline location. The gas turbine engine 20 further includes a speed sensor probe 70 that is operable to determine a rotational speed of the first spool 30. In an example only, the speed sensor probe 70 is located at an axial position A₃ that is axially aft of the first axial position A₁ and the second axial position A₂, and the speed sensor probe 70 is fixed or stationary relative to the first spool 30. In this example, the axial position A₃ is also forward of the second compressor 52 and annular combustor 56 and axially aft of the first compressor 44. It is to be understood that relative positional terms, such as "forward," "aft," "upper," "lower," "above," "below," and the like are relative to the normal operational attitude of the gas turbine engine 20 and should not be considered otherwise limiting.

The location of the speed sensor probe at the axial position A₃ ensures that the gas turbine engine 20 will be protected from an over-speed condition in the event that either of the first compressor 44 or the fan drive gear system 48 becomes decoupled from the first spool 30. For example, if the compressor hub 44a or the fan drive gear system input coupling 48a fail, there will be a reduction in driven mass that causes the rotational speed of the first spool 30 to increase. If the speed increase is too great, the first turbine 46 can be damaged or fail. By locating the speed sensor probe 70 at the axial position A₃ that is axially aft of the first axial position A₁ and the second axial position A₂, the actual over-speed condition of the first spool 30 can be detected in an event that causes decoupling. In comparison, if a speed sensor probe was positioned forward of axial position A₂, the speed sensor probe would not be able to properly detect an over-speed condition caused by the first spool 30 becoming decoupled at the compressor hub 44a or fan drive gear system input coupling 48a because the speed sensor probe would be reading the rotational speed from a decoupled component. Thus, the reading would not reflect the actual speed of the first spool 30.

In a further example, the speed sensor probe 70 is in communication with a controller 72, such as a full authority digital engine control. The speed sensor probe 70 generates a signal that is proportional to the detected speed of the first spool 30 and sends the signal to the controller 72. In one example method, in response to detecting a rotational speed that exceeds a predetermined threshold rotational speed (i.e., an over-speed condition), the controller 72 changes (e.g., decreases) a fuel supply to the annular combustor 56. In a further example, in response to the over-speed condition, the controller 72 ceases the fuel supply to the combustor 56. By decreasing or ceasing the fuel supply to the combustor 56, less energy is provided to the first turbine 46. As a result, the speed of the first turbine 46 and first spool 30 decreases.

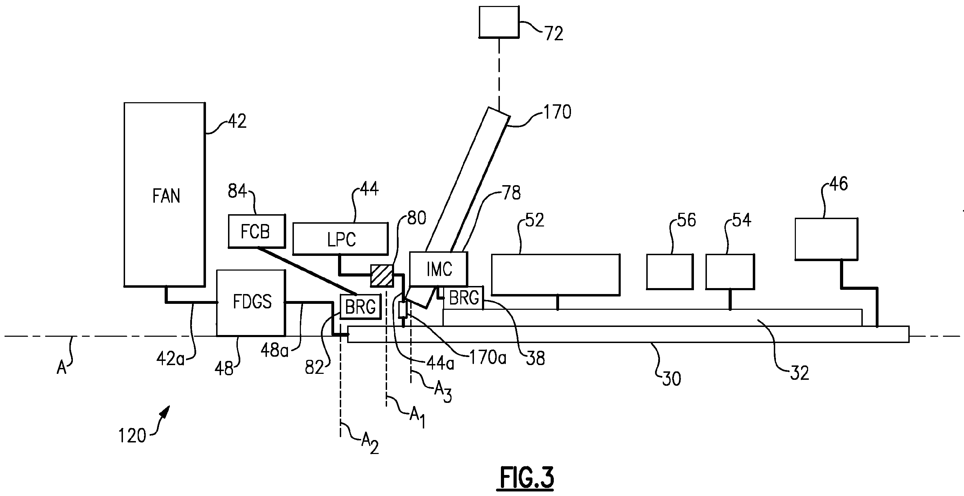

Figure 3 illustrates selected portions of another example gas turbine engine 120 that has a similar engine architecture as the gas turbine engine 20 of Figures 1 and 2, not covered by the claimed invention. In this example, the first spool 30 is coupled at the first axial position A₁ to the compressor hub 44a, which is coupled to drive the first compressor 44. The first spool 30 is also coupled at the second axial position A₂ to the fan drive gear system input coupling 48a, which is coupled to drive the fan drive gear system 48. A fan output shaft 42a is coupled to be rotated by the fan drive gear system 48 to drive the fan 42. A speed sensor probe 170 in another example only is located at the third axial position A₃ that is axially aft of the first axial position A₁ and the second axial position A₂. The speed sensor probe 170 is mounted to and accessible through an intermediate case 78.

At least one sensor target 170a is coupled to rotate with the first spool 30. In one example, the at least one sensor target 170a includes a plurality of sensor targets 170a. In an embodiment, the sensor target 170a includes slots or teeth such that rotation of the slots or teeth can be detected by a detector in the speed sensor probe 170. The detector can be a hall-effect sensor, a laser sensor, an optical sensor or the like that is capable of detecting the rotation of the slots or teeth. The speed sensor probe 170 generates a signal that is proportional to the detected speed and sends the signal to the controller 72.

In this example, the first spool 30 is coupled to the compressor hub 44a at a splined connection 80, which also defines the first axial position A₁. The first spool 30 is supported by a bearing 82, which is fixed relative to front center body case 84 and positions the first spool 30 relative to the engine central axis A. The fan drive gear system input coupling 48a extends forward from the bearing 82 and is coupled at its forward end to the fan drive gear system 48. Rotation of the first spool 30 drives the fan drive gear system input coupling 48a, which drives the fan drive gear system 48.

As described above, decoupling of the first compressor 44 at the compressor hub 44a from the first spool 30 or decoupling of the fan drive gear system input coupling 48a from the first spool 30 reduces the driven mass of the first spool 30 and first turbine 46. By positioning the speed sensor probe 170 at axial position A₃ axially aft of axial position A₁ and axial position A₂, an over-speed condition can be properly determined.

In this example, in a decoupling event at the compressor hub 44a or the fan drive gear system input coupling 48a, the bearing 82 maintains the position of the first spool 30 with regard to the engine central axis A. Thus, the first spool 30 continues to rotate in the decoupling event. In comparison, if the first spool 30 decouples at a position that is axially aft of axial position A₁, the bearing 82 would not maintain the axial alignment of the first spool 30. The first spool 30 would misalign such that rotating and static hardware would mesh to slow or stop the rotation of the first spool 30 and first turbine 46. Thus, there is no need to locate the speed center probe 170 farther axially aft of the axial positions A₁ and A₂. Moreover, locating the speed sensor probe 170 forward of axial positions A₁ and A₂ would not enable the speed sensor probe 170 to properly detect the actual speed of the first spool 30 should a decoupling event occur at the compressor hub 44a or the fan drive gear system input coupling 48a.

In a further example, the location of the speed sensor probe 70 at the axial position A₃ also facilitates assembly of the gas turbine engine 20/120, maintenance and the like. An example method of assembling the gas turbine engine 20/120 includes affixing the speed sensor probe 70/170 at the axial position A₃ that is axially aft of the first axial position A₁ and the second axial position A₂. For instance, the speed sensor probe 70/170 is periodically replaced in the gas turbine engine 20/120 as regular maintenance or if the speed sensor probe 70/170 becomes damaged. Thus, the used speed sensor probe 70/170 is removed and a new speed sensor probe 70/170 is affixed as a replacement.

In a further example, the speed sensor probe 70/170 is affixed at axial position A₃ using fasteners, such as bolts. In a replacement operation, the used speed sensor probe 70/170 is removed by electrically disconnecting the speed sensor probe 70/170 and removing the fasteners. Once removed, the new speed sensor probe 70/170 is installed into position, the fasteners are tightened and the new speed sensor probe 70/170 is electrically connected. In one further example, the axial position A₃ of the speed sensor probe 70/170 is accessible through one or more cowl doors.

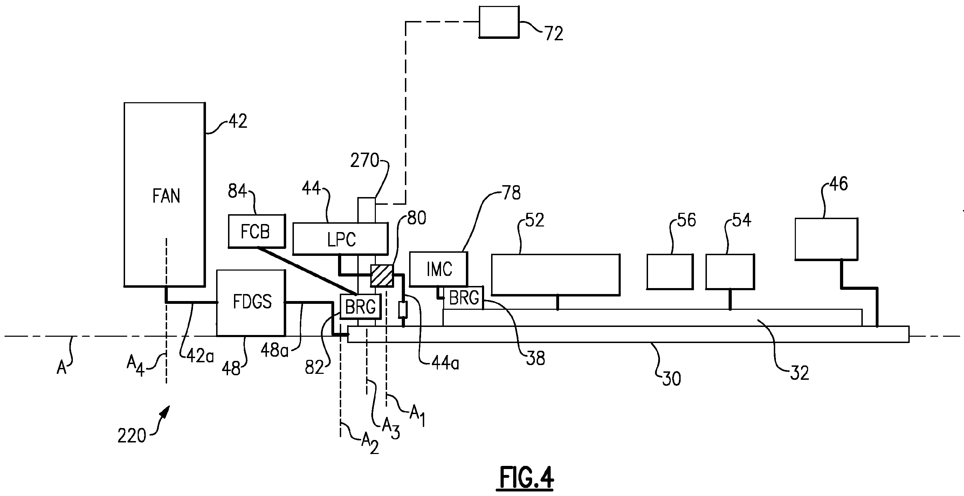

Figure 4 illustrates selected portions of another gas turbine engine 220 according to the present invention that has a similar engine architecture as the gas turbine engine 20 of Figures 1 and 2. In the present invention, sensor probe 270 is in a different axial location than the sensor probe 70/170. Similar to sensor probes 70/170, the sensor probe 270 is axially aft of the second axial position A₂. Unlike sensor probes 70/170, the sensor probe 270 is axially forward of the first axial position A₁. As can be appreciated, a sensor target, similar to sensor target 170a can be coupled to rotate with the first spool 30. The sensor probe 270 generates a signal that is proportional to the detected speed and sends the signal to the controller 72. Additionally, any of the sensors probes 70/170/270 can be timing sensors that generate one or more signals per revolution of the first spool 30 that can be used to determine speed.

The fan output shaft 42a is coupled at a fourth axial position A₄ to the fan 42. The fourth axial position A₄ is forward of the second axial position A₂ and the third axial position A₃. As can also be appreciated from the drawings, the compressor section 24 is axially aft of the fan drive gear system 48 and the axial positions are distinct from one another.

The location of the speed sensor probe at the axial position A₃, according to the embodiment in fig. 4, ensures that that gas turbine engine 20 will be protected from an over-speed condition in the event that either of the first compressor 44 or the fan drive gear system 48 becomes decoupled from the first spool 30.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

## Claims

1. A gas turbine engine comprising:
a fan (42);
a fan drive gear system (48) coupled to drive the fan about an engine central axis;
a compressor section (24) including a first compressor (44) and a second compressor (52);
a turbine section (28) including:
a first turbine (46) coupled to drive a first spool (30), the first spool being coupled at a first axial position (A₁) to a compressor hub that is coupled to drive the first compressor and the first spool being coupled at a second, different axial position (A₂) to a fan drive input shaft that is coupled to drive the fan drive gear system, at least one sensor target (170a) coupled to rotate with the first spool, and
a second turbine (54) coupled through a second spool (32) to drive the second compressor; and **characterized by**
a sensor probe (70) operable together with the sensor target to determine a rotational speed of the first spool, the sensor probe being located at a third axial position (A₃) that is axially forward of the first axial position and axially aft of the second axial position.

2. The gas turbine engine as recited in claim 1, further comprising a fan output shaft (40) coupled to be rotated by the fan drive gear system (48) and coupled at a fourth axial position (A₄) to the fan, the fourth axial position being distinct from the first axial position (A₁) and the second axial position (A₂), and wherein the fourth axial position is forward of the second axial position and the third axial position (A₃).

3. The gas turbine engine as recited in claim 1 or 2, wherein the compressor section (24) is axially aft of the fan drive gear system (48).

4. The gas turbine engine as recited in claim 1, 2 or 3, wherein the first compressor (44) has three stages.

5. The gas turbine engine as recited in any preceding claim, wherein the sensor probe (270) is stationary relative to the first spool.

6. The gas turbine engine as recited in any preceding claim, wherein the first turbine (46) has a maximum rotor diameter D1 and the fan has a fan diameter D2 such that a ratio D1/D2 is less than 0.6.

7. The gas turbine engine as recited in any preceding claim, including a controller (72) in communication with the sensor probe, the controller being operable to cease a fuel supply to a combustor in response to a rotational speed of the first spool exceeding a predetermined threshold rotational speed.

8. The gas turbine engine as recited in any preceding claim, wherein the fan drive gear system (48) includes a planetary gear having a gear reduction ratio greater than about 2.3:1, or wherein the fan drive gear system includes a planetary gear having a gear reduction ratio greater than about 2.5:1.

9. The gas turbine engine as recited in any preceding claim, wherein the fan drive gear system (48) provides a speed reduction from the first spool to the fan.

10. The gas turbine engine as recited in any preceding claim, wherein the fan (42) and the compressor section (24) define a bypass ratio that is greater than 6.

11. A method of assembling a gas turbine engine, the gas turbine engine including a first turbine (46) coupled to drive a first spool (30), the first spool being coupled at a first axial position (A₁) to a compressor hub that is coupled to drive a first compressor and the first spool being coupled at a second, different axial position to a fan drive input shaft that is coupled to drive a fan drive gear system (48) that drives a fan, and at least one sensor target (170a) coupled to rotate with the first spool, the method **characterized by** comprising:
affixing a sensor probe (270) that is operable together with the sensor target to determine a rotational speed of the first spool at an axial location (A₃) that is axially forward of the first axial position and axially aft of the second axial position

12. The method as recited in claim 11, wherein the first turbine (46) has a maximum rotor diameter D1 and the fan has a fan diameter D2 such that a ratio D1/D2 is less than 0.6.

13. The method as recited in claim 11, including, prior to affixing the speed sensor probe (270), removing a used speed sensor probe from the gas turbine engine such that the affixed speed sensor probe replaces the used speed sensor probe.

14. A method of operating a gas turbine engine, the gas turbine engine including a first turbine coupled to drive a first spool, the first spool being coupled at a first axial position to a compressor hub that is coupled to drive a first compressor and the first spool being coupled at a second, different axial position to a fan drive input shaft that is coupled to drive a fan drive gear system that drives a fan, and at least one sensor target coupled to rotate with the first spool, the method **characterized by** comprising:
determining a rotational speed of the first spool by a sensor probe operable with the sensor target, the sensor probe being located at an axial location that is axially forward of the first axial position and axially aft of the second axial position; and
changing a fuel supply to a combustor of the gas turbine engine in response to the rotational speed exceeding a predetermined threshold rotational speed.

15. The method as recited in claim 14, including ceasing the fuel supply in response to the rotational speed exceeding the predetermined threshold rotational speed.

## Patentansprüche

1. Gasturbinenmotor, umfassend:
einen Fan (42);
ein Fanantriebsgetriebesystem (48), das gekoppelt ist, um den Fan um eine Mittelachse des Motors anzutreiben;
einen Verdichterabschnitt (24), einschließend einen ersten Verdichter (44) und einen zweiten Verdichter (52);
einen Turbinenabschnitt (28), einschließend:
eine erste Turbine (46), die gekoppelt ist, um eine erste Spule (30) anzutreiben, wobei die erste Spule in einer ersten axialen Position (A₁) an eine Verdichternabe gekoppelt ist, die gekoppelt ist, um den ersten Verdichter anzutreiben und die erste Spule in einer zweiten, anderen axialen Position (A₂) an eine Fanantriebseingangswelle gekoppelt ist, die gekoppelt ist, um das Fanantriebsgetriebesystem anzutreiben, wobei mindestens ein Sensorziel (170a) gekoppelt ist, um sich mit der ersten Spule zu drehen, und
eine zweite Turbine (54), die durch eine zweite Spule (32) gekoppelt ist, um den zweiten Verdichter anzutreiben; und **gekennzeichnet durch**
eine Sensorsonde (70), die betriebsfähig ist, um zusammen mit dem Sensorziel eine Drehzahl der ersten Spule zu bestimmen, wobei sich die Sensorsonde in einer dritten axialen Position (A₃) befindet, die axial vor der ersten axialen Position und axial hinter der zweiten axialen Position liegt.

2. Gasturbinenmotor nach Anspruch 1, ferner umfassend eine Fanausgangswelle (40), die gekoppelt ist, um durch das Fanantriebsgetriebesystem (48) gedreht zu werden und in einer vierten axialen Position (A₄) an den Fan gekoppelt ist, wobei sich die vierte axiale Position von der ersten axialen Position (A₁) und der zweiten axialen Position (A₂) unterscheidet, und wobei die vierte axiale Position vor der zweiten axialen Position und der dritten axialen Position (A₃) liegt.

3. Gasturbinenmotor nach Anspruch 1 oder 2, wobei der Verdichterabschnitt (24) axial hinter dem Fanantriebsgetriebesystem (48) liegt.

4. Gasturbinenmotor nach Anspruch 1, 2 oder 3, wobei der erste Verdichter (44) drei Stufen aufweist.

5. Gasturbinenmotor nach einem der vorhergehenden Ansprüche, wobei die Sensorsonde (270) in Bezug auf die erste Spule unbeweglich ist.

6. Gasturbinenmotor nach einem der vorhergehenden Ansprüche, wobei die erste Turbine (46) einen maximalen Rotordurchmesser D1 aufweist und der Fan einen Fandurchmesser D2 aufweist, sodass ein Verhältnis D1/D2 kleiner als 0,6 ist.

7. Gasturbinenmotor nach einem der vorhergehenden Ansprüche, einschließend eine Steuerung (72) in Kommunikation mit der Sensorsonde, wobei die Steuerung betriebsfähig ist, um eine Kraftstoffzufuhr zu einer Brennkammer als Reaktion darauf zu unterbrechen, dass eine Drehzahl der ersten Spule eine vorgegebene Schwellendrehzahl übersteigt.

8. Gasturbinenmotor nach einem der vorhergehenden Ansprüche, wobei das Fanantriebsgetriebesystem (48) ein Planetenrad mit einem Untersetzungsverhältnis einschließt, das größer als ungefähr 2,3:1 ist, oder wobei das Fanantriebsgetriebesystem ein Planetenrad mit einem Untersetzungsverhältnis einschließt, das größer als ungefähr 2,5:1 ist.

9. Gasturbinenmotor nach einem der vorhergehenden Ansprüche, wobei das Fanantriebsgetriebesystem (48) eine Verringerung der Drehzahl von der ersten Spule zum Fan bereitstellt.

10. Gasturbinenmotor nach einem der vorhergehenden Ansprüche, wobei der Fan (42) und der Verdichterabschnitt (24) ein Nebenstromverhältnis definieren, das größer als 6 ist.

11. Verfahren zum Montieren eines Gasturbinenmotors, wobei der Gasturbinenmotor eine erste Turbine (46) einschließt, die gekoppelt ist, um eine erste Spule (30) anzutreiben, wobei die erste Spule in einer ersten axialen Position (A₁) an eine Verdichternabe gekoppelt ist, die gekoppelt ist, um einen ersten Verdichter anzutreiben und die erste Spule in einer zweiten, anderen axialen Position an eine Fanantriebseingangswelle gekoppelt ist, die gekoppelt ist, um ein Fanantriebsgetriebesystem (48) anzutreiben, das einen Fan antreibt, und mindestens ein Sensorziel (170a) gekoppelt ist, um sich mit der ersten Spule zu drehen, wobei das Verfahren **dadurch gekennzeichnet ist, dass** es Folgendes umfasst:
Befestigen einer Sensorsonde (270), die betriebsfähig ist, um zusammen mit dem Sensorziel eine Drehzahl der ersten Spule zu bestimmen, in einer axialen Position (A₃), die axial vor der ersten axialen Position und axial hinter der zweiten axialen Position liegt.

12. Verfahren nach Anspruch 11, wobei die erste Turbine (46) einen maximalen Rotordurchmesser D1 aufweist und der Fan einen Fandurchmesser D2 aufweist, sodass ein Verhältnis D1/D2 kleiner als 0,6 ist.

13. Verfahren nach Anspruch 11, einschließend, vor dem Befestigen der Geschwindigkeitssensorsonde (270), ein Entfernen einer gebrauchten Geschwindigkeitssensorsonde von dem Gasturbinenmotor, sodass die befestigte Geschwindigkeitssensorsonde die gebrauchte Geschwindigkeitssensorsonde ersetzt.

14. Verfahren zum Betreiben eines Gasturbinenmotors, wobei der Gasturbinenmotor eine erste Turbine einschließt, die gekoppelt ist, um eine erste Spule anzutreiben, wobei die erste Spule in einer ersten axialen Position an eine Verdichternabe gekoppelt ist, die gekoppelt ist, um einen ersten Verdichter anzutreiben und die erste Spule in einer zweiten, anderen axialen Position an eine Fanantriebseingangswelle gekoppelt ist, die gekoppelt ist, um ein Fanantriebsgetriebesystem anzutreiben, das einen Fan antreibt, und mindestens ein Sensorziel gekoppelt ist, um sich mit der ersten Spule zu drehen, wobei das Verfahren **dadurch gekennzeichnet ist, dass** es Folgendes umfasst:
Bestimmen einer Drehzahl der ersten Spule durch eine Sensorsonde, die mit dem Sensorziel betriebsfähig ist, wobei sich die Sensorsonde in einer axialen Position befindet, die axial vor der ersten axialen Position und axial hinter der zweiten axialen Position liegt; und
Ändern einer Kraftstoffzufuhr zu einer Brennkammer des Gasturbinenmotors als Reaktion darauf, dass die Drehzahl eine vorgegebene Schwellendrehzahl übersteigt.

15. Verfahren nach Anspruch 14, einschließend ein Unterbrechen der Kraftstoffzufuhr als Reaktion darauf, dass die Drehzahl die vorgegebene Schwellendrehzahl übersteigt.

## Revendications

1. Moteur à turbine à gaz comprenant :
une soufflante (42) ;
un système d'engrenage d'entraînement de soufflante (48) couplé pour entraîner la soufflante autour d'un axe central de moteur ;
une section de compresseur (24), comprenant un premier compresseur (44) et un second compresseur (52) ;
une section de turbine (28) comprenant :
une première turbine (46) couplée pour entraîner une première bobine (30), la première bobine étant couplée dans une première position axiale (A₁) à un moyeu de compresseur qui est couplé pour entraîner le premier compresseur et la première bobine étant couplée dans une deuxième position axiale (A₂) différente à un arbre d'entrée d'entraînement de soufflante qui est couplé pour entraîner le système d'engrenage d'entraînement de soufflante, au moins une cible de capteur (170a) couplée pour tourner avec la première bobine, et
une seconde turbine (54) couplée à travers une seconde bobine (32) pour entraîner le second compresseur ; et **caractérisé par**
une sonde de capteur (70) pouvant être utilisée en combinaison avec la cible de capteur pour déterminer une vitesse de rotation de la première bobine, la sonde de capteur étant positionnée dans une troisième position axiale (A₃) qui est axialement à l'avant de la première position axiale et axialement à l'arrière de la deuxième position axiale.

2. Moteur à turbine à gaz selon la revendication 1, comprenant en outre un arbre de sortie de soufflante (40) couplé pour être mis en rotation par le système d'engrenage d'entraînement de soufflante (48) et couplé dans une quatrième position axiale (A₄) à la soufflante, la quatrième position axiale étant distincte de la première position axiale (A₁) et de la deuxième position axiale (A₂), et dans lequel la quatrième position axiale est à l'avant de la deuxième position axiale et de la troisième position axiale (A₃).

3. Moteur à turbine à gaz selon la revendication 1 ou 2, dans lequel la section de compresseur (24) est axialement à l'arrière du système d'engrenage d'entraînement de soufflante (48).

4. Moteur à turbine à gaz selon la revendication 1, 2 ou 3, dans lequel le premier compresseur (44) a trois étages.

5. Moteur à turbine à gaz selon une quelconque revendication précédente, dans lequel la sonde de capteur (270) est fixe par rapport à la première bobine.

6. Moteur à turbine à gaz selon une quelconque revendication précédente, dans lequel la première turbine (46) a un diamètre de rotor maximal D1 et la soufflante a un diamètre de soufflante D2 de sorte qu'un rapport D1/D2 est inférieur à 0,6.

7. Moteur à turbine à gaz selon une quelconque revendication précédente, comprenant un dispositif de commande (72) en communication avec la sonde de capteur, le dispositif de commande pouvant être utilisé pour interrompre une alimentation en carburant d'une chambre de combustion en réponse au fait qu'une vitesse de rotation de la première bobine dépasse une vitesse de rotation seuil prédéterminée.

8. Moteur à turbine à gaz selon une quelconque revendication précédente, dans lequel le système d'engrenage d'entraînement de soufflante (48) comprend un engrenage planétaire ayant un rapport de démultiplication supérieur à environ 2,3:1, ou dans lequel le système d'engrenage d'entraînement de soufflante comprend un engrenage planétaire ayant un rapport de démultiplication supérieur à environ 2,5:1.

9. Moteur à turbine à gaz selon une quelconque revendication précédente, dans lequel le système d'engrenage d'entraînement de soufflante (48) offre une réduction de vitesse de la première bobine à la soufflante.

10. Moteur à turbine à gaz selon une quelconque revendication précédente, dans lequel la soufflante (42) et la section de compresseur (24) définissent un taux de dilution qui est supérieur à 6.

11. Procédé d'assemblage d'un moteur à turbine à gaz, le moteur à turbine à gaz comprenant une première turbine (46) couplée pour entraîner une première bobine (30), la première bobine étant couplée dans une première position axiale (A₁) à un moyeu de compresseur qui est couplé pour entraîner un premier compresseur et la première bobine étant couplée dans une deuxième position axiale différente à un arbre d'entrée d'entraînement de soufflante qui est couplé pour entraîner un système d'engrenage d'entraînement de soufflante (48) qui entraîne une soufflante, et au moins une cible de capteur (170a) couplée pour tourner avec la première bobine, le procédé étant **caractérisé en ce qu'**il comprend :
la fixation d'une sonde de capteur (270) pouvant être utilisée en combinaison avec la cible de capteur pour déterminer une vitesse de rotation de la première bobine dans une position axiale (A₃) qui est axialement à l'avant de la première position axiale et axialement à l'arrière de la deuxième position axiale.

12. Procédé selon la revendication 11, dans lequel la première turbine (46) a un diamètre de rotor maximal D1 et la soufflante a un diamètre de soufflante D2 de sorte qu'un rapport D1/D2 est inférieur à 0,6.

13. Procédé selon la revendication 11, comprenant, avant la fixation de la sonde de capteur de vitesse (270), le retrait d'une sonde de capteur de vitesse utilisée du moteur à turbine à gaz, de sorte que la sonde de capteur de vitesse fixée remplace la sonde de capteur de vitesse utilisée.

14. Procédé d'utilisation d'un moteur à turbine à gaz, le moteur à turbine à gaz comprenant une première turbine couplée pour entraîner une première bobine, la première bobine étant couplée dans une première position axiale à un moyeu de compresseur qui est couplé pour entraîner un premier compresseur et la première bobine étant couplée dans une deuxième position axiale différente de celle d'un arbre d'entrée d'entraînement de soufflante qui est couplé pour entraîner un système d'engrenage d'entraînement de soufflante qui entraîne une soufflante, et au moins une cible de capteur couplée pour tourner avec la première bobine, le procédé étant **caractérisé en ce qu'**il comprend :
la détermination d'une vitesse de rotation de la première bobine par une sonde de capteur pouvant être utilisée avec la cible de capteur, la sonde de capteur étant située dans une position axiale qui est axialement à l'avant de la première position axiale et axialement à l'arrière de la deuxième position axiale ; et
la modification d'une alimentation en carburant d'une chambre de combustion du moteur à turbine à gaz en réponse au fait que la vitesse de rotation dépasse une vitesse de rotation seuil prédéterminée.

15. Procédé selon la revendication 14, comprenant l'interruption de l'alimentation en carburant en réponse au fait que la vitesse de rotation dépasse la vitesse de rotation seuil prédéterminée.
